# EUROPEAN PATENT APPLICATION

(11) **EP 1 639 920 A1**
(43) Date of publication of application: **29.03.2006**
(21) Application number: 05018909.1
(22) Date of filing: 31.08.2005
(51) Int. Cl.: A47D 15/00, B62B 9/24

(54) **Baby carriage having seat belt adjustable with growth of baby**

(30) Priority: 28.09.2004 JP 2004282063
(71) Applicant: Aprica Ikujikenkyukai Aprica Kassai Kabushikikaisha, Osaka-shi, Osaka 542-0082 (JP)
(72) Inventor: Kassai, Kenzou, Osaka-shi, Osaka 542-0083 (JP); Oonuma, Toshio, Chuo-ku, Osaka-shi, Osaka 542-0082 (JP)
(74) Representative: Feldmeier, Jürgen

(57) **Abstract**

A baby carriage (10) comprises a body frame (25), a seat forming member (33) including a seat (30) and a backrest part (32) supported by the body frame (25), and a seat belt (11). The seat belt (11) comprises a waist belt (12) having a loop belt part (13) and a connection belt part (15) to connect said loop belt part (13) to the body frame (25), and a crotch belt (18) which can be connected to the waist belt (12). The loop belt part (13) has right and left side parts (51a) and (51b), a front part (52) and a rear part (53) which are connected to the right and left side parts (51a) and (51b), and the seat belt can selectively take either one of a first form in which the rear part of the loop belt part (13) is positioned on the back side of the seat forming member (33), and a second form in which it is positioned on the front side of the seat forming member (33).

## Description

### BACKGROUND OF THE INVENTION

### 1. Field of the Invention

The present invention relates to a baby carriage and a using method of a seat belt and more particularly, it relates to a baby carriage having a seat belt which can surely hold a baby in accordance with a degree of growth of the baby and a using method of the seat belt.

### 2. Description of the Background Art

A conventional baby carriage having a seat belt is disclosed in Laid-open Japanese Utility Model Publication No. 61-125870, for example.

According to the above document, a loop belt is disclosed for holding a circumference of a body of a baby sat on a seat of the baby carriage and the loop belt is connected to a body of the baby carriage with space therebetween by a flexible connection part.

The conventional seat belt for the baby carriage was constituted as described above. According to the seat belt having the above constitution, after the baby is grown up to some extent, the baby can be held by the loop belt, however, when the baby is little, it is preferable that the baby is held by a waist belt only. This is because when the baby is little, since the baby is laid on the seat and hardly moves, a surface of the seat is preferably flat and smooth.

In order to implement the above, it is necessary to provide two kinds of belts such as a loop belt and a nonloop belt to change over those in accordance with a degree of growth of the baby.

### SUMMARY OF THE INVENTION

The present invention is made in view of the above problems and it is an object of the present invention to provide a baby carriage which can appropriately hold a baby in accordance with a degree of growth of the baby without providing a plurality of seat belts, and a using method of a seat belt.

A baby carriage according to the present invention comprises a body frame, a seat forming member including a seat and a backrest part supported by the body frame, and a seat belt. The seat belt comprises a waist belt having a loop belt part and a connection belt part to connect the loop belt part to the body frame, and a crotch belt which can be connected to the waist belt. The loop belt part has right and left side parts, and a front part and a rear part which are connected to the right and left side parts. The seat belt can selectively take either a first form in which the rear part of the loop belt part is positioned on the back side of the seat forming member, and a second form in which it is positioned on the front side of the seat forming member.

Since the seat belt can selectively take either one of the first form in which the rear part of the loop belt is positioned on the back side of the seat forming member and the second form in which it is positioned on the front side of the seat forming member, when the baby is little and hardly moves, the front part and the right and left parts of the loop belt can be used as the waist belt by using the seat belt in the first form. Meanwhile, after the baby is grown up and starts to move actively, the entire loop belt can hold the waist of the baby by using the seat belt in the second form.

As a result, there can be provided the baby carriage which can appropriately hold the baby in accordance with the degree of growth of the baby without providing a plurality of seat belts.

Another aspect of the present invention relates to a using method of a seat belt in a baby carriage comprising a body frame; a seat forming member including a seat and a backrest part supported by the body frame; and the seat belt. The seat belt comprises a waist belt having a loop belt part and a connection belt part to connect the loop belt part to the body frame, and a crotch belt which can be connected to the waist belt. The loop belt part has right and left side parts, and a front part and a rear part which are connected to the right and left side parts. The method comprises the step of using the seat belt in a first form in which the rear part of the loop belt part is positioned on the back side of the seat forming member while a baby sat on the seat forming member is little, and the step of using the seat belt in a second form in which it is positioned on the front side of the seat forming member after the baby sat on the seat forming member grows up.

Since the first form in which the rear part of the loop belt part is positioned on the back side of the seat forming member is used while the baby is little, and the second form in which the rear part of the loop belt part is positioned on the front side of the seat forming member is used after the baby sat on the seat forming member is grown up, there can be provided the using method of the seat belt which can appropriately hold the baby in accordance with the degree of growth of the baby without providing a plurality of seat belts.

### BRIEF DESCRIPTION OF THE DRAWINGS

Figs. 1A and 1B are views showing a first form of a method of mounting a waist belt on a baby carriage according to one embodiment of the present invention;
Fig. 2 is a perspective view showing the waist belt;
Figs. 3A and 3B are views showing a positional relation between the waist belt and a seat forming member; and
Fig. 4 is a view showing a second form of the method of mounting the waist belt on the baby carriage according to one embodiment of the present invention;

### DESCRIPTION OF THE PREFERRED EMBODIMENTS

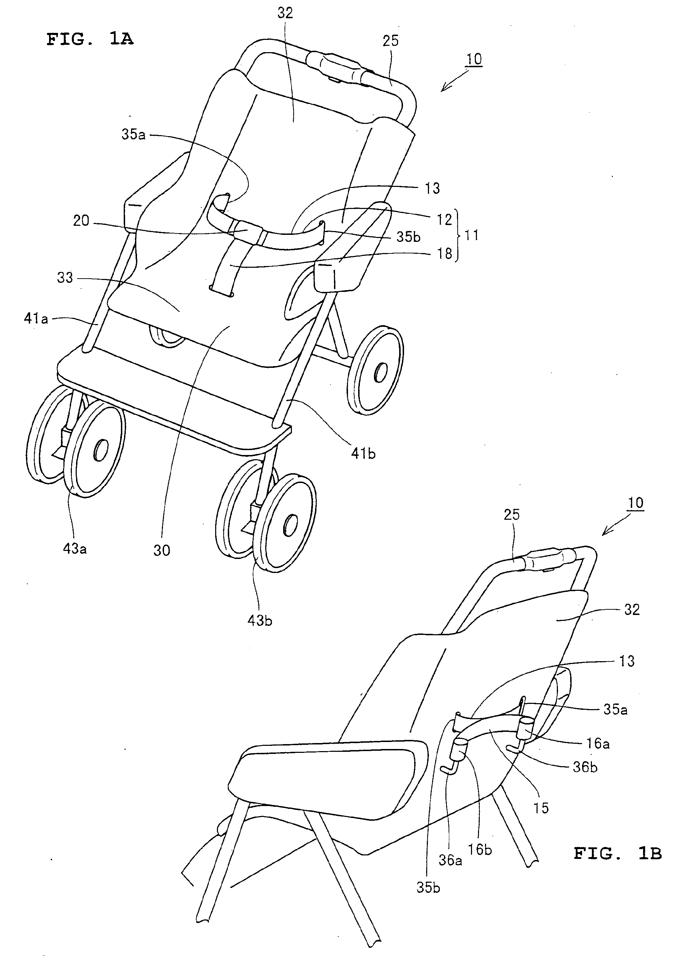

An embodiment of the present invention is described with reference to the drawings hereinafter. Figs. 1A and 1B are perspective views showing a baby carriage having a seat belt according to one embodiment of the present invention. Fig. 1A is a perspective view showing a front side of a baby carriage 10 and Fig. 1B is a perspective view showing a back side of a backrest part of the baby carriage 10 shown in Fig. 1A.

Referring to Figs. 1A and 1B, the baby carriage 10 comprises a seat 30, a backrest part 32 provided so as to be continued from the seat 30, a body frame 25 supporting the seat 30 and the backrest part 32, legs 41a and 41b (reference numerals for rear legs are omitted) provided at the front and the rear sides, and wheels 43a and 43b provided at lower ends of the legs 41a and 41b. The seat 30, and the backrest part 32 provided so as to be continued from the seat 30 constitute a seat forming member 33.

A seat belt 11 is provided on the seat forming member 33. The seat belt 11 comprises a waist belt 12 including a loop belt part 13 and a connection belt part 15 to connect the loop belt part 13 to the body frame 25 (Fig. 1B), and a crotch belt 18 which can be connected to the waist belt 12.

The crotch belt 18 has one end fixed to a forward center of the seat 30 and the other end having a connector 20, to which the waist belt 12 can be connected through the connector 20.

Referring to Fig 1B, the waist belt 12 is led to a back side through two holes 35a and 35b provided on both ends of the backrest part 32 in a width direction and in the vicinity of the seat 30, and detachably engages with waist belt mounting parts 36a and 36b on the back side as shown in the drawing. The waist belt mounting parts 36a and 36b are connected to the body frame 25.

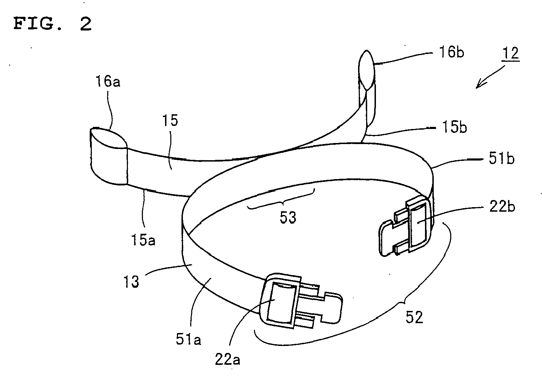

Fig. 2 is a perspective view showing the waist belt 12. Referring to Fig. 2, the waist belt 12 comprises the loop belt part 13 and the connection belt part 15 connected to the loop belt part 13 as described above. The loop belt 13 is not looped in Fig. 2. This is because the loop belt part 13 is constituted by connecting the connection parts 22a and 22b to the connector 20.

More specifically, the loop belt part 13 comprises right and left side parts 51a and 51b having connection parts 22a and 22b at their ends, respectively which are detachably connectable to the connector 20, a front part 52 including the connection parts 22a and 22b connected to the right and left side parts 51a and 51b on the front side, and a rear part 53 connected to the right and left side parts 51a and 51b on the back side. According to this embodiment, the connection belt part 15 comprises a pair of connection belt parts 15a and 15b, and frame mounting parts 16a and 16b are provided on their ends having ring-shaped ends to mount the connection belt parts 15a and 15b on the waist belt mounting parts 36a and 36b (Fig. 1B) which are integrated with the body frame 25. Although it is not shown in the drawing, a length of the waist belt part 13 is adjustable.

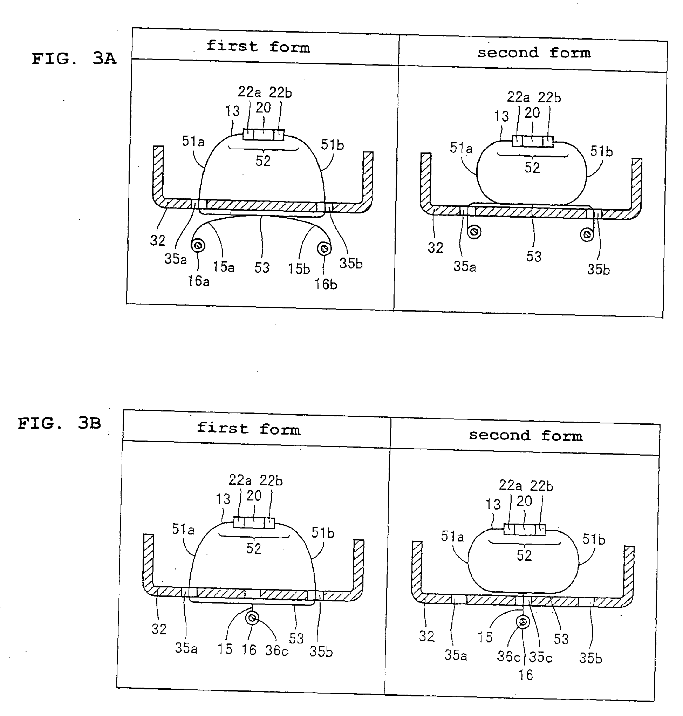

Figs. 3A and 3B show a positional relation between the waist belt 12 and the seat forming part 33 when the waist belt 12 is seen from above the seat forming member 33. Fig. 3A shows a case where the connection belt part 15 connected to the waist belt 12 is divided into two as shown in Figs. 1A, 1B and 2. According to its first form, the rear part 53 of the loop belt part 13 is positioned on the back side of the seat forming part 33.

Meanwhile, according to its second form, the rear part 53 of the waist belt part 13 is positioned on the front side of the seat forming part 33.

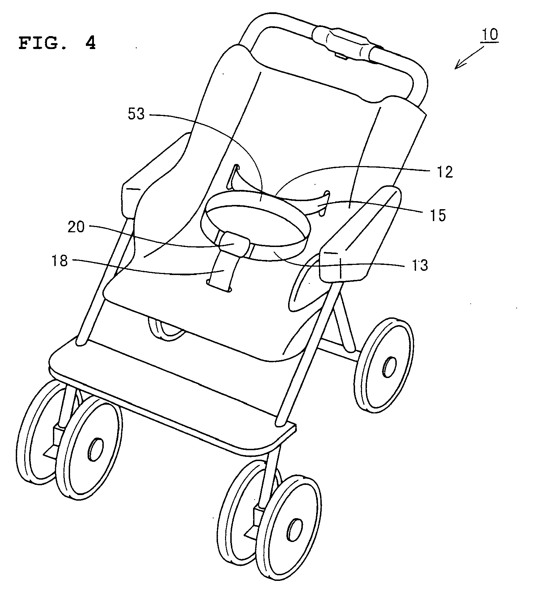

Fig. 4 is a view corresponding to Fig. 1A when the second form is taken. As shown in Fig. 4, the loop belt part 13 including its rear part 53 is positioned on the front side of the seat forming member 33.

Fig. 3B shows a case where only one connection belt part is provided which connects the waist belt 12 to the waist belt mounting part 36 which is integrated with the body frame 25. In this case, a through hole 35c is provided between the through holes 35a and 35b of the backrest part 32 and the connection belt part 15 passes through the through hole 35c and it is led to the back side of the seat forming member 33 and mounted on a single waist belt mounting part 36c. Since others are the same as the case shown in Fig. 3A, the description thereof is not reiterated.

As described above, according to the baby carriage of the present invention, the seat belt 11 can selectively takes either one of the first form in which the rear part 53 of the loop belt part 13 of the waist belt 12 is positioned on the back side of the seat forming member 33 and only a part of the loop belt part 13 is positioned on the front side of the seat forming member 33 and the second form in which the rear part 53 of the loop belt part 13 is positioned on the front side of the seat forming member 33 and the entire part of the loop belt part 13 is positioned on the front side of the seat forming member 33.

As a result, the waist belt 12 is used in the form shown in Figs. 1A and 1B until the baby can sit by oneself because the baby in an early stage does not move actively, and the waist belt 12 is used in the form shown in Fig. 4 to prohibit movement such as standing up on the seat 30 to restrain the waist of the baby after the baby starts to move actively. Since the waist part of the baby can be restrained in the center of the seat and the baby can be held at an appropriate position, the foot parts and the upper body of the baby can be prevented from being deviated.

Next, a method of using the above forms selectively will be described. First, while the baby sat on the baby carriage is little and hardly moves, the waist belt 12 is set as shown in Fig. 1 as described above. After the baby grows up, the connection parts 22a and 22b are dismounted from the connector 20 and the loop belt part 13 is pulled out to the back side of the seat forming member 33 through the holes 35a and 35b, and the frame mounting parts 16a and 16b are dismounted from the waist belt mounting parts 36a and 36b of the body frame 25, so that waist belt 12 is removed.

Then, the frame mounting parts 16a and 16b provided at the ends of the connection belt part 15 of the waist belt 12 is led from the front side of the backrest part 32 to the back side thereof through the through holes 35a and 35b and mounted on the waist belt mounting parts 36a and 36b. Thus, the entire loop belt part of the waist belt 12 is positioned on the front side of the seat forming member 33.

When the form is changed from the second form to the first form, procedures are performed in a reverse way

Although the waist belt 12 and the crotch belt are connected by connecting the waist belt 12 to the connector 20 mounted on the crotch belt 18 in the above embodiment, the present invention is not limited to the above and both may be connected by another method.

Since the baby carriage according to the present invention has the seat belt which can hold the baby appropriately depending on a size of the baby without providing a plurality of seat belts, it can be advantageously used as the baby carriage having the seat belt.

Although one embodiment of the present invention has been described with reference to the drawings, the present invention is not limited to the illustrated embodiment. Various kinds of variations can be added to the illustrated embodiment within the same or equivalent scope of the present invention.

## Claims

1. A baby carriage (10) comprising:
a body frame (25);
a seat forming member (33) comprising a seat (30) and a backrest part (32) supported by said body frame (25); and
a seat belt (11),
wherein said seat belt (11) comprises a waist belt (12) having a loop belt part (13) and a connection belt part (15) to connect said loop belt part (13) to said body frame (25), and a crotch belt (18) which can be connected to said waist belt (12),
said loop belt part (13) has right and left side parts (51a, 51b), and a front part and a rear part (52, 53) which are connected to said right and left side parts (51a, 51b), and
said seat belt (11) can selectively take either one of a first form in which the rear part (53) of said loop belt part (13) is positioned on the back side of said seat forming member (33), and a second form in which the rear part (53) of said loop belt part (13) is positioned on the front side (52) of the seat forming member (33).

2. A method of using a seat belt in a baby carriage (10) comprising a body frame (25); a seat forming member (33) including a seat (30) and a backrest part (32) supported by said body frame (25); and the seat belt (11), wherein
said seat belt (11) comprises a waist belt (12) having a loop belt part (13) and a connection belt part (15) to connect said loop belt part (13) to said body frame (25), and a crotch belt (18) which can be connected to said waist belt (12), and
said loop belt part (13) has right and left side parts (51a, 51b), and a front part and a rear part (52, 53) which are connected to said right and left side parts (51a, 51b),
said method comprising the steps of;
using said seat belt (11) in a first form in which the rear part of said loop belt (53) is positioned on the back side of said seat forming member (33) is taken while a baby sat on said seat forming member (33) is little, and
using said seat belt (11) in a second form in which the rear part of said loop belt part (53) is positioned on the front side of the seat forming member (33) is taken after the baby sat on said seat forming member (33) grows up.
